# EUROPÄISCHE PATENTSCHRIFT

(11) **EP 3 063 437 B1**
(45) Veröffentlichungstag und Bekanntmachung des Hinweises auf die Patenterteilung: **19.09.2018**
(21) Anmeldenummer: 14789291.3
(22) Anmeldetag: 27.10.2014
(51) Int. Cl.: F16J 15/32, B60C 23/00, F16C 33/78

(54) **WELLENDICHTRING**
SHAFT SEAL
BAGUE D'ÉTANCHÉITÉ D'ARBRE

(30) Priorität: 28.10.2013 DE 102013017879
(43) Veröffentlichungstag der Anmeldung: 07.09.2016
(73) Patentinhaber: GV Engineering GmbH, 71296 Heimsheim (DE)
(72) Erfinder: TSIBERIDIS, Konstantinos, 74076 Heilbronn (DE)
(74) Vertreter: Beyer, Andreas
(86) Internationale Anmeldenummer: PCT/EP2014/072962
(87) Internationale Veröffentlichungsnummer: WO 2015/063013

(56) Entgegenhaltungen:
- WO-A2-2014/063873
- DE-A1- 2 643 769
- DE-A1- 10 019 641
- GB-A- 850 767
- US-A- 5 503 480
- US-A1- 2003 019 692

## Beschreibung

Die vorliegende Erfindung betrifft allgemein Dichtringe und insbesondere einen Wellendichtring, der zur Druckmittelübertragung zwischen einem feststehenden Körper und einem koaxial zu diesem angeordneten, drehbaren Körper geeignet ist, wobei der Wellendichtring zwischen dem feststehenden Körper und dem drehbaren Körper angeordnet sein soll.

Wellendichtringe werden in verschiedenen Bereichen der Technik zur Abdichtung zwischen feststehenden Körpern und koaxial zu diesen angeordneten, drehbaren Körper eingesetzt, etwa zur Abdichtung einer rotierenden Welle gegenüber einem feststehenden Gehäuse oder zur Abdichtung einer feststehenden Achse gegen eine sich um die Achse drehende Nabe. Durch den Einsatz von Wellendichtringen soll z.B. der Austritt eines im Zwischenraum zwischen den beiden Körpern vorhandenen Schmiermittels sowie der Eintritt von Verunreinigungen in den Zwischenraum verhindert werden.

In manchen Anwendungsbereichen kann es notwendig sein, eine zur Druckmittelübertragung geeignete Kopplung zwischen dem feststehenden und dem drehbaren Körper herzustellen. Bei Fahrzeugen ist es beispielsweise wünschenswert, eine Übertragung von Druckluft von einer feststehenden Radachse in eine sich drehbar an der Radachse gelagerte Radnabe zu ermöglichen, um so - auch während der Fahrt - eine autonome Reifendruckregulierung vornehmen zu können. Im Fernlastverkehr etwa kann der Reifendruck auf diese Weise an veränderte Beladungsverhältnisse, Fahrbahnoberflächen oder Umgebungstemperaturen angepasst werden.

Zur Realisierung einer derartigen Druckluftübertragung in Fahrzeugen ist vorgeschlagen worden, zur Abdichtung zwischen der Radachse und der Radnabe zwei Wellendichtringe, beispielsweise handelsübliche Simmerringe®, axial voneinander beabstandet anzuordnen, um zwischen den Wellendichtringen einen druckdichten, ringförmigen Hohlraum zu bilden, durch welchen Druckluft von einer in den Hohlraum mündenden, an der Radachse vorgesehenen Druckluftleitung in eine aus dem Hohlraum führende, an der Radnabe vorgesehene Druckluftleitung weitergeleitet werden kann. Derartige Anordnungen sind beispielsweise aus den Druckschriften DE 10 2009 057 158 A1 und DE 690 05 731 T2 bekannt. Die dort beschriebenen Lösungen haben sich allerdings aufgrund eines für heutige Fahrzeugachsen im Allgemeinen zu großen Platzbedarfs bzw. aufgrund einer unter der gegebenen Druckbeanspruchung zu geringen Lebensdauer als wenig praxistauglich erwiesen.

Weitere Wellendichtanordnungen sind aus den Druckschriften GB 850 767 A, DE 26 43 769 A1, US 5 503 480 A, DE 100 19 641 A1 und US 2003/019692 A1 bekannt. Die Druckschrift WO 2014/063873 A2 bildet einen Stand der Technik nach Art. 54(3) EPÜ.

Es ist daher Aufgabe der Erfindung, eine Lösung anzugeben, mit der eine zur Druckmittelübertragung geeignete Kopplung zwischen einem feststehenden Körper und einem koaxial zu diesem angeordneten, drehbaren Körper sowohl platzsparend als auch langlebig realisiert werden kann.

Erfindungsgemäß ist diese Aufgabe gelöst durch einen Wellendichtring mit einem ringförmigen Grundkörper, dessen eine Mantelfläche eine in Umfangsrichtung verlaufende Dichtfläche bildet und von dessen entgegengesetzter, anderer Mantelfläche sich radial wenigstens zwei Umfangsdichtlippen erstrecken, zwischen denen ein nach außen offener, äußerer Hohlraum begrenzt ist. Der Wellendichtring zeichnet sich aus durch einen Druckmitteleinlass in einer Außenwand des Grundkörpers und einen Druckmittelauslass, der in den äußeren Hohlraum mündet und in Fluidverbindung mit dem Einlass steht. Der Grundkörper weist einen inneren Hohlraum auf, der von dem äußeren Hohlraum druckdicht getrennt ist, wobei die den inneren Hohlraum begrenzenden Außenwände des Wellendichtrings durch den Grundkörper gebildet sind.

Zur Abdichtung zwischen einem feststehenden Körper und einem koaxial zu diesem angeordneten, drehbaren Körper ist der Wellendichtring derart zwischen den beiden Körpern anzuordnen, dass die an der einen Mantelfläche des Grundkörpers gebildete Dichtfläche des Wellendichtrings dichtend an einer Mantelfläche eines der beiden Körper anliegt, während die an der entgegengesetzten, anderen Mantelfläche des Grundkörpers sich radial erstreckenden Umfangsdichtlippen eine Mantelfläche des anderen der beiden Körper dichtend berühren. Die hier Dichtfläche genannte Fläche ist diejenige Oberfläche des Wellendichtrings, mit der er an einem der beiden Körper, in der Regel durch Reibschluss, haftet. Bei einer Drehbewegung des drehbaren Körpers haftet der Wellendichtring somit mit seiner Dichtfläche an der Mantelfläche des einen der beiden Körper und die Umfangsdichtlippen des Wellendichtrings gleiten dichtend auf der Mantelfläche des anderen der beiden Körper.

Der drehbare Körper (z.B. eine Welle) kann radial innerhalb des Wellendichtrings und der feststehende Körper (z.B. ein Gehäuse) radial außerhalb des Wellendichtrings angeordnet sein. In diesem Fall wird der drehbare Körper eine zylindrische und der feststehende Körper eine hohlzylindrische Form aufweisen. Es kann aber auch der feststehende Körper (z.B. eine Achse) radial innerhalb des Wellendichtrings und der drehbare Körper (z.B. eine Nabe) radial außerhalb des Wellendichtrings angeordnet sein, so dass der feststehende Körper eine zylindrische und der drehbare Körper eine hohlzylindrische Form aufweist. Die in Umfangsrichtung verlaufende Dichtfläche des Wellendichtrings kann an der radial inneren Mantelfläche oder an der radial äußeren Mantelfläche seines Grundkörpers gebildet sein und die Umfangsdichtlippen des Wellendichtrings befinden sich an der radial jeweils entgegengesetzten Mantelfläche seines Grundkörpers.

Ist der Wellendichtring dichtend zwischen dem feststehenden und dem drehbaren Körper angeordnet, so wird der zwischen den Umfangsdichtlippen begrenzte, äußere Hohlraum des Wellendichtrings durch die Mantelfläche des mit den Umfangsdichtlippen in gleitendem Kontakt stehenden Körpers begrenzt und bildet somit eine druckdichte, ringförmige Kammer, die eine zur Druckmittelweiterleitung geeignete Kopplung zwischen den beiden Körpern herstellt. Um eine Druckmittelübertragung zwischen einer an dem feststehenden Körper vorhandenen Druckmittelleitung und einer an dem drehbaren Körper vorhandenen Druckmittelleitung zu realisieren, ist der Wellendichtring derart zwischen den beiden Körpern anzubringen, dass die am feststehenden Körper vorhandene Druckmittelleitung mit dem Druckmitteleinlass des Wellendichtrings druckdicht und fluidleitend verbunden ist und die am drehbaren Körper vorhandene Druckmittelleitung aus der durch den äußeren Hohlraum gebildeten, ringförmigen Kammer gespeist wird. Ein über die am feststehenden Körper vorhandene Druckmittelleitung in den Wellendichtring geleitetes Druckmittel, beispielsweise Druckluft, wird dann von dem Einlass zu dem in den äußeren Hohlraum mündenden Auslass geleitet und aus dem äußeren Hohlraum - unabhängig von der jeweiligen Drehstellung des drehbaren Körpers - in die am drehbaren Körper vorhandene Druckmittelleitung weitergeleitet. Der Wellendichtring dient auf diese Weise als druckdichtes Kopplungselement, dessen zwischen den Umfangsdichtlippen gebildeter, äußerer Hohlraum einen zur Druckmittelweiterleitung geeigneten Kopplungsraum zwischen dem feststehenden und dem drehbaren Körper bereitstellt.

Der Druckmitteleinlass des Wellendichtrings kann in einer beliebigen Außenwand des Grundkörpers angeordnet sein, beispielsweise in einer seitlichen Außenwand oder in der Außenwand, welche die in Umfangsrichtung verlaufende Dichtfläche des Wellendichtrings bildet. Ist der Einlass in der letztgenannten Außenwand gebildet, so kann die am feststehenden Körper vorhandene Druckmittelleitung innerhalb des feststehenden Körpers ausgebildet sein, etwa durch eine in den feststehenden Körper eingebrachte Bohrung, deren Austrittsöffnung mit dem Druckmitteleinlass des Wellendichtrings in Deckung zu bringen ist. Ist der Einlass dagegen in einer seitlichen Außenwand des Grundkörpers gebildet, so kann die Druckmittelleitung des feststehenden Körpers außerhalb am feststehenden Körper geführt sein, um mit dem in der seitlichen Außenwand vorhandenen Druckmitteleinlass verbunden zu werden.

Die zwischen dem Einlass und dem Auslass im Wellendichtring vorhandene, fluidleitende Verbindung kann auf unterschiedliche Art und Weise realisiert sein. Beispielsweise kann hierfür ein in dem Material des Grundkörpers selbst ausgebildeter Kanal vorgesehen sein, der den Einlass mit dem Auslass verbindet. Auch denkbar ist, eine separate z.B. aus Metall oder Kunststoff bestehende, rohrförmige Leitung von dem Einlass zu dem Auslass zu führen. Ist der Einlass des Wellendichtrings in einer seitlichen Außenwand des Grundkörpers gebildet, so kann sich eine rohrförmige Leitung auch über die seitliche Außenwand des Wellendichtrings hinaus erstrecken und einen zur Verbindung mit der am feststehenden Körper vorhandenen Druckmittelleitung geeigneten Anschluss aufweisen.

Ein Wellendichtring der beschriebenen Art ist besonders deshalb vorteilhaft, weil er zur Realisierung des druckdichten Kopplungsraums zwischen dem feststehenden und dem drehbaren Körper weitere Komponenten entbehrlich macht und dadurch eine sehr platzsparende Lösung zur Druckmittelübertragung bereitstellt. Ein weiterer Vorteil ergibt sich bei Druckbeaufschlagung. Bei einer Zuführung von Druckmittel in den äußeren Hohlraum entsteht in dem äußeren Hohlraum ein unter Umständen signifikanter Überdruck (d. h. ein größerer Druck als der Atmosphärendruck). Dieser Überdruck tendiert dazu, die den äußeren Hohlraum begrenzenden Umfangsdichtlippen axial auseinanderzudrücken, so dass bei einer Druckbeaufschlagung lediglich die Umfangsdichtlippen signifikant beansprucht werden. Die Folge ist eine im Vergleich zum eingangs genannten Stand der Technik, bei dem der aufgebrachte Druck stets auf die gesamten Wellendichtringseiten einwirkt, relativ geringe Bauteilbeanspruchung, die die Lebensdauer einer solchen Lösung insgesamt erhöht.

Der Grundkörper weist einen inneren Hohlraum auf, der von dem äußeren Hohlraum druckdicht getrennt ist. Diese Trennung kann durch eine den inneren vom äußeren Hohlraum trennende Wand realisiert sein, die entweder aus dem Grundkörpermaterial selbst gebildet ist, d.h. einstückig mit dem Grundkörper ausgeführt ist, oder durch ein separates in dem Grundkörper befestigtes, ringförmiges, beispielsweise aus Metall oder Kunststoff bestehendes Trennelement. Eine von dem Einlass zu dem Auslass führende Leitung kann zumindest teilweise durch den inneren Hohlraum führen. Ebenso kann der in den äußeren Hohlraum mündende Auslass in der die beiden Hohlräume voneinander trennenden Wand angeordnet sein. Ein solcher innerer Hohlraum eignet sich insbesondere auch als Schmiermitteldepot.

Gemäß einer weiteren möglichen Ausgestaltung kann daher vorgesehen sein, dass der innere Hohlraum ein Schmiermittel enthält, welches zur permanenten Schmierung der dynamisch beanspruchten Gleitflächen der Umfangsdichtlippen des Wellendichtrings verwendet werden kann. Um ein in dem inneren Hohlraum befindliches Schmiermittel zu den Gleitflächen der Umfangsdichtlippen zu führen, kann sich zumindest ein Schmiermittelkanal aus dem inneren Hohlraum in mindestens eine der Umfangsdichtlippen erstrecken und an der Gleitfläche der betreffenden Umfangsdichtlippe münden. In dem inneren Hohlraum vorhandenes Schmiermittel kann auf diese Weise an die Gleitfläche der Umfangsdichtlippe abgegeben werden, um diese bei einer Drehbewegung des drehbaren Körpers zu schmieren und somit die Lebensdauer des Wellendichtrings deutlich zu erhöhen.

Um die Dichtwirkung des Wellendichtrings im Bereich des äußeren Hohlraums zu verbessern, kann benachbart zu mindestens einer der den äußeren Hohlraum begrenzenden Umfangsdichtlippen eine weitere sich radial erstreckende Umfangsdichtlippe vorhanden sein, wobei zwischen einer den äußeren Hohlraum begrenzenden Umfangsdichtlippe und einer weiteren, benachbarten Umfangsdichtlippe ein ringförmiger Zwischenraum vorhanden ist. Derartige benachbarte Umfangsdichtlippen sorgen für eine zusätzliche Abdichtung des äußeren Hohlraums, die insbesondere dann notwendig sein kann, wenn der in dem äußeren Hohlraum vorhandene Überdruck so groß wird, dass die den Hohlraum begrenzenden Umfangsdichtlippen ihm alleine nicht mehr zuverlässig standhalten können. Bei einer solchen Ausgestaltung kann ferner vorgesehen sein, dass sich zumindest ein Schmiermittelkanal aus dem inneren Hohlraum in den Zwischenraum zwischen zwei benachbarten Umfangsdichtlippen erstreckt. In dem inneren Hohlraum vorhandenes Schmiermittel kann dann über diesen Schmiermittelkanal in den Zwischenraum zwischen den betreffenden, benachbarten Umfangsdichtlippen gelangen und dort die Gleitflächen der benachbarten Umfangsdichtlippen schmieren.

Bei dieser Ausgestaltung ist es auch denkbar, dass sich die den äußeren Hohlraum begrenzenden Umfangsdichtlippen radial weniger weit erstrecken als ihre jeweils benachbarten Umfangsdichtlippen, so dass die den äußeren Hohlraum begrenzenden Umfangsdichtlippen bei einem Normaldruck von der Mantelfläche des abzudichtenden Körpers noch beabstandet sind und sich erst bei einem Überdruck in dem äußeren Hohlraum elastisch so verformen, dass sie mit der Mantelfläche des Körpers dichtend in Kontakt kommen. Auf diese Weise werden die den äußeren Hohlraum begrenzenden Umfangsdichtlippen bei Normaldruck geschont und die Dichtwirkung des Wellendichtrings ist dennoch durch die jeweils benachbarten Umfangsdichtlippen gewährleistet.

Gemäß einer Weiterbildung kann der Zwischenraum zwischen den benachbarten Umfangsdichtlippen zumindest teilweise mit einem schwammartigen Schaumstoff ausgefüllt sein. Mit "schwammartig" ist hier eine gewisse Saugfähigkeit bzw. die generelle Eignung zur Flüssigkeitsaufnahme gemeint. Es versteht sich, dass anstelle von Schaumstoff auch andere Materialien mit vergleichbaren Eigenschaften eingesetzt werden können. Aus dem inneren Hohlraum über einen Schmiermittelkanal in diesen Zwischenraum eintretendes Schmiermittel kann von dem Schaumstoff aufgenommen und anschließend von diesem an die Gleitflächen der benachbarten Umfangsdichtlippen bzw. auf die Mantelfläche des mit den Umfangsdichtlippen in Kontakt stehenden Körpers verteilt werden. Vorzugsweise füllt der Schaumstoff den gesamten Zwischenraum zwischen den benachbarten Umfangsdichtlippen aus, um eine möglichst vollständige Schmierung der Gleitflächen der Umfangsdichtlippen zu erreichen. Auch in dem inneren Hohlraum kann ein schwammartiger Schaumstoff vorhanden sein, der wenigstens einen Teil des inneren Hohlraums ausfüllt und eine Eintrittsöffnung des zumindest einen Schmiermittelkanals überdeckt. Die Anordnung eines Schaumstoffs unmittelbar vor bzw. über einem Schmiermittelkanal bewirkt, dass in dem inneren Hohlraum befindliches Schmiermittel nicht sofort durch den Schmiermittelkanal abfließt, sondern von dem Schaumstoff zunächst aufgenommen und gespeichert wird, um dann allmählich in den Schmiermittelkanal abgegeben zu werden.

Um ein zur Vorhaltung von Schmiermittel geeignetes Schmiermitteldepot zu bilden, kann der innere Hohlraum des Wellendichtrings nach außen, insbesondere zur Seite hin abgedichtet sein. Bereits bei der Fertigung des Wellendichtrings kann der innere Hohlraum dann mit einem Schmiermittel vorbefüllt werden, so dass er als "selbstschmierender" Wellendichtring verbaut werden kann. In einer anderen Ausgestaltung kann eine seitliche Außenwand des Wellendichtrings mit wenigstens einer Schmiermitteleintrittsöffnung versehen sein, die in den inneren Hohlraum führt. Durch eine derartige Öffnung kann Schmiermittel, welches in dem Zwischenraum zwischen dem feststehenden und dem drehbaren Körper beispielsweise in einem Lager vorhanden ist, in den inneren Hohlraum eintreten und sich von dort aus durch Schmiermittelkanäle wie beschrieben zu den Gleitflächen der Umfangsdichtlippen verteilen.

Gemäß einer weiteren Ausführungsform kann ein im Grundkörper aufgenommener, den Grundkörper versteifender Kern in einen Bereich verlängert sein, von dem sich wenigstens eine Umfangsdichtlippe erstreckt. Der versteifende Kern kann auch in wenigstens eine Umfangsdichtlippe hinein verlängert sein. Auch kann der Kern eine Querschnittsform aufweisen, die im Wesentlichen an die Querschnittsform des Grundkörpers angepasst ist. Der Kern ist dabei stets stabiler ausgeführt als der - typischerweise aus Elastomermaterial bestehende - Grundkörper und kann etwa durch einen Versteifungsring aus Metall realisiert sein, der in das Material des Grundkörpers eingebettet ist. Bei einem Überdruck in dem äußeren Hohlraum wird somit der Grundkörper bzw. eine einen Kern aufweisende Umfangsdichtlippe stabilisiert, um dem Druck besser standhalten zu können.

In einer Weiterbildung kann ein in einer der Umfangsdichtlippen vorhandener Abschnitt des Kerns bezüglich des übrigen Kerns schwenkbar sein bzw. zum übrigen Kern gelenkig angeordnet sein. Dies kann dadurch erreicht werden, dass der Kern in einem Übergangsbereich von einem Abschnitt in der Umfangsdichtlippe zum übrigen Kern eine Materialschwächung aufweist, beispielsweise durch dünner ausgebildetes Material oder durch Aussparungen. Ebenfalls denkbar ist, den Kern mehrteilig auszuführen, so dass ein im Bereich der Umfangsdichtlippe vorhandener Abschnitt des Kerns von dem übrigen Kern getrennt ist. Sofern eine den äußeren Hohlraum begrenzende Umfangsdichtlippe bei Normaldruck in dem äußeren Hohlraum nicht in Kontakt mit dem abzudichtenden Körper steht, ist durch eine solche schwenkbare Anordnung gewährleistet, dass sich die Umfangsdichtlippe bei einem Überdruck in dem äußeren Hohlraum - trotz der durch den Kern erzielten Versteifung - ausreichend verformen kann, um mit der Mantelfläche des Körpers dichtend in Kontakt zu kommen.

Die den inneren Hohlraum begrenzenden seitlichen Außenwände des Wellendichtrings sind durch den Grundkörper selbst gebildet. Gemäß einer nicht erfindungsgemäßen Variante ist es aber auch vorstellbar, dass eine seitliche Außenwand durch eine an dem Grundkörper befestigte, etwa aus Metall oder Kunststoff bestehende Abdeckung gebildet ist. Eine solche Abdeckung, z.B. ein Blechring, kann zwischen die die Mantelflächen des Grundkörpers bildenden Außenwände des Grundkörpers geklemmt sein und den inneren Hohlraum zur Seite hin abdichten. Bei entsprechender Dimensionierung und Ausgestaltung kann die Abdeckung eine Anpresskraft erzeugen, die die Umfangsdichtlippen gegen die Mantelfläche des mit ihnen in Kontakt stehenden Körpers drückt, um so die abdichtende Wirkung des Wellendichtrings zu verbessern.

In einer weiteren Ausgestaltung kann eine seitliche Außenwand des Grundkörpers durch ein außerhalb der seitlichen Außenwand an dem Grundkörper angebrachtes, beispielsweise aus Metall oder Kunststoff bestehendes Versteifungselement stabilisiert sein. Ein solches zusätzliches Versteifungselement kann ringförmig ausgebildet sein und dient dazu, den Grundkörper seitlich zu stützen. Es wirkt dadurch insbesondere einer axialen Auseinanderbewegung der Umfangsdichtlippen bei einem Überdruck in dem äußeren Hohlraum entgegen.

Gemäß einer noch weiteren Ausführungsform können die den äußeren Hohlraum begrenzenden Umfangsdichtlippen auch durch wenigstens ein Verbindungselement axial miteinander gekoppelt sein. Eine derartige Kopplung kann beispielsweise durch Anbringen eines oder mehrerer starrer Verbindungselemente zwischen den beiden Umfangsdichtlippen erreicht werden. Die Verbindungselemente sind dabei vorzugsweise im Bereich nahe der Gleitflächen der Umfangsdichtlippen angeordnet. Eine solche axiale Kopplung hilft dabei, ein axiales Auseinanderbewegen oder gar ein Umklappen der Umfangsdichtlippen bei einem Überdruck in dem äußeren Hohlraum zu verhindern. Das Verbindungselement kann auch ringförmig ausgestaltet sein, muss dann aber radiale Durchgangsöffnungen aufweisen, damit die Druckmittelübertragung nicht behindert oder verhindert wird.

In einer weiteren Ausführungsform kann schließlich vorgesehen sein, dass die den äußeren Hohlraum begrenzenden Umfangsdichtlippen eine unterschiedliche radiale Erstreckung aufweisen. Dies kann notwendig sein, um den Wellendichtring in ein speziell ausgebildetes Bauteil zu integrieren. Wird beispielsweise zur drehbaren Lagerung des drehbaren Körpers an dem feststehenden Körper ein Kugellager verwendet und weist dieses Kugellager zwei Laufringe auf, von denen einer axial über den anderen hinaussteht, so kann der Wellendichtring derart mit dem Kugellager verbunden werden, dass er mit seiner in Umfangsrichtung verlaufenden Dichtfläche an dem überstehenden Teil des einen Laufrings anliegt und seine sich radial weniger weit erstreckende Umfangsdichtlippe mit der Innenfläche des anderen Laufrings in Kontakt ist, während seine sich radial weiter erstreckende Umfangsdichtlippe mit der Mantelfläche eines der beiden Körper in Kontakt ist. Der Wellendichtring bildet dann im Bereich zwischen den Laufringen eine abdichtende Außenhaut für das Kugellager, die ein Eindringen von Staub und Schmutzpartikeln in das Kugellager sowie einen Austritt von Schmiermittel aus dem Kugellager verhindert, und gleichzeitig einen Kopplungsraum zur Druckmittelübertragung zwischen den beiden Körpern. Der Wellendichtring kann bei der Fertigung des Kugellagers als fester Bestandteil desselben schon integriert werden und mit dem Kugellager als Einheit in einer Achsbaugruppe verbaut werden.

Mehrere Ausführungsbeispiele eines erfindungsgemäßen Wellendichtrings werden im Folgenden unter Bezugnahme auf die beigefügten, schematischen Zeichnungen näher erläutert. Es zeigt:
- Figur 1: eine Längsschnittansicht einer Fahrzeugachsbaugruppe mit einem nicht erfindungsgemäßen Wellendichtring;
- Figuren 2a und 2b: eine geschnittene Detailansicht eines ersten Ausführungsbeispiels eines erfindungsgemäßen Wellendichtrings mit einem versteifenden Kern, einem schmiermittelbefüllten, inneren Hohlraum und Schmiermittelkanälen in den Umfangsdichtlippen;
- Figuren 3a und 3b: eine Variante des in den Figuren 2a und 2b gezeigten Ausführungsbeispiels;
- Figuren 4a und 4b: eine geschnittene Detailansicht eines zweiten Ausführungsbeispiels eines Wellendichtrings mit beiderseits des äußeren Hohlraums vorhandenen, doppelten Umfangsdichtlippen;
- Figuren 5a und 5b: eine Variante des in den Figuren 4a und 4b gezeigten Ausführungsbeispiels;
- Figuren 6a und 6b: eine geschnittene Detailansicht eines dritten Ausführungsbeispiels eines Wellendichtrings mit außerhalb der seitlichen Außenwände befestigten Versteifungselementen;
- Figuren 7a und 7b: eine geschnittene Detailansicht eines vierten Ausführungsbeispiels eines nicht erfindungsgemäßen Wellendichtrings mit einer eine seitliche Außenwand bildenden Abdeckung mit einer in den inneren Hohlraum führenden Schmiermitteleintrittsöffnung;
- Figuren 8a und 8b: eine geschnittene Detailansicht eines fünften Ausführungsbeispiels eines in ein Kugellager integrierten Wellendichtrings mit einem schmiermittelbefüllten, inneren Hohlraum, einer in den inneren Hohlraum führenden Schmiermitteleintrittsöffnung und Umfangsdichtlippen, die eine unterschiedliche radiale Erstreckung aufweisen; und
- Figuren 9a und 9b: eine geschnittene Detailansicht eines sechsten Ausführungsbeispiels eines in ein Kugellager integrierten Wellendichtrings mit radial innen angeordneten Umfangsdichtlippen.

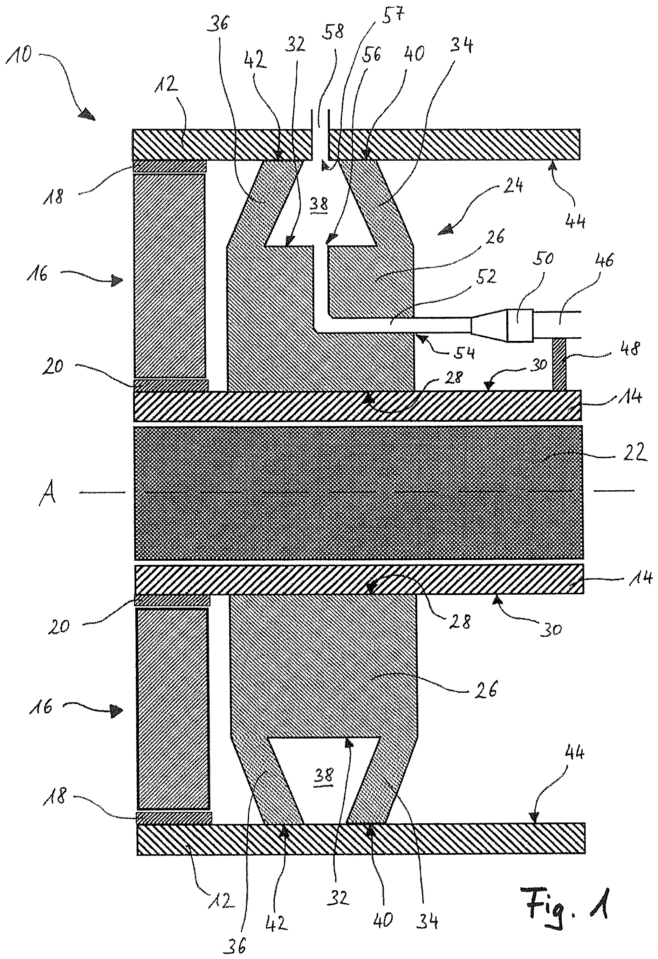

Figur 1 zeigt exemplarisch ein Anwendungsbeispiel eines nicht erfindungsgemäßen druckmittelübertragungsfähigen Wellendichtrings in einer im Längsschnitt dargestellten Fahrzeugachsbaugruppe 10. Es sei ausdrücklich darauf hingewiesen, dass die Anwendung des Wellendichtrings in einer Fahrzeugachsbaugruppe nur beispielhaft ist. Das gewählte Beispiel dient lediglich zum besseren Verständnis und ermöglicht, die einzelnen Merkmale des Wellendichtrings in einem konkreten Anwendungskontext zu veranschaulichen. Es versteht sich, dass ein Wellendichtring auch in anderen Anwendungsgebieten zum Einsatz kommen kann, so etwa in Getrieben, Motoren, Zentrifugen, Waschmaschinen und Küchenkleingeräten, um nur einige Beispiele zu nennen.

Die in Figur 1 dargestellte Fahrzeugachsbaugruppe 10 umfasst eine Nabe 12, die um eine Mittellängsachse A drehbar an einem zylindrischen, hohlen Achskörper 14 gelagert ist. Im Sinne der obigen Ausführungen bildet der Achskörper 14 einen feststehenden (fahrzeugfesten) Körper und die Nabe 12 einen koaxial zu diesem angeordneten, drehbaren Körper. Die Lagerung der Nabe 12 an dem Achskörper 14 ist durch ein Kugellager 16 realisiert, dessen radial äußerer Laufring 18 an der Nabe 12 fixiert ist und dessen radial innerer Laufring 20 an dem Achskörper 14 fixiert ist. Die Nabe 12 ist durch eine nicht näher dargestellte Befestigung mit einer durch den Achskörper 14 verlaufenden Antriebswelle 22 verbunden, welche die von einem ebenfalls nicht dargestellten Motor erzeugte Antriebskraft auf die Nabe 12 überträgt, um Letztere um den Achskörper 14 zu drehen. An der Nabe 12 kann ein ebenfalls nicht dargestelltes Fahrzeugrad befestigt sein.

Zwischen der Nabe 12 und dem Achskörper 14 ist axial benachbart zum Kugellager 16 ein Wellendichtring 24 angeordnet, dessen ringförmiger Grundkörper 26 eine durch die radial innere Mantelfläche 28 des Grundkörpers 26 gebildete, in Umfangsrichtung verlaufende Dichtfläche aufweist, die flächig an einer radial äußeren Mantelfläche 30 des Achskörpers 14 anliegt, um mit dieser eine abdichtende, kraftschlüssige Verbindung herzustellen. Von einer radial äußeren Mantelfläche 32 des Grundkörpers 26 erstrecken sich zwei Umfangsdichtlippen 34 und 36 im Wesentlichen radial nach außen und begrenzen zwischen sich einen äußeren Hohlraum 38. Die Umfangsdichtlippen 34 und 36 weisen an ihrem freien Ende jeweils Gleitflächen 40 bzw. 42 auf, die mit einer radial inneren Mantelfläche 44 der Nabe 12 dichtend in Kontakt sind und auf denen, bei einer Drehbewegung der Nabe 12 um den Achskörper 14, die Mantelfläche 44 der Nabe 12 gleitet. Der äußere Hohlraum 38 ist radial außen von der Mantelfläche 44 der Nabe 12 begrenzt und bildet somit eine druckdichte, ringförmige Kammer, die eine zur Druckmittelübertragung geeignete Kopplung zwischen der Nabe 12 und dem Achskörper 14 herstellt. Genauer wird der äußere Hohlraum 38 durch die Umfangsdichtlippen 34 und 36, die Mantelfläche 32 des Grundkörpers 26 und die Mantelfläche 44 der Nabe 12 begrenzt.

An dem Achskörper 14 ist eine Druckmittelleitung 46 angebracht, die mit einer hier nicht näher dargestellten, an Bord des Fahrzeugs vorhandenen Druckmittelquelle verbunden sein kann, beispielsweise mit einem Kompressor zur Erzeugung von Druckluft oder einem Behälter mit unter Druck stehendem Reifenfüllmittel. Die Druckmittelleitung 46 ist durch eine geeignete Halterung 48 am Achskörper 14 fixiert und daher, wie auch der Achskörper 14, feststehend. Die Druckmittelleitung 46 ist über einen Anschluss 50 druckdicht und fluidleitend mit einer rohrförmigen Leitung 52 verbunden, die durch einen in einer seitlichen Außenwand des Grundkörpers 26 vorhandenen Druckmitteleinlass 54 des Wellendichtrings 24 geführt ist. Im gezeigten Beispiel ist die Leitung 52 durch den Einlass 54 bis in den Grundkörper 26 hinein geführt und steht außen über den Grundkörper 26 hinaus. Jedoch kann sich der Ausschluss 50 auch unmittelbar am Einlass 54 befinden und beispielsweise in der Seitenwand des Grundkörpers 26 ausgebildet sein. Die Leitung 52 braucht kein separates Bauteil zu sein, sondern kann z.B. einstückig mit dem Grundkörper 26 ausgebildet sein, etwa durch Formgießen der Leitung 52 zusammen mit dem üblicherweise aus Elastomermaterial bestehenden Grundkörper 26. Der Anschluss 50 kann ein Gewinde aufweisen, auf welches die Druckmittelleitung 46 aufgeschraubt werden kann. Es versteht sich, dass die Verbindung eines am Wellendichtring vorgesehenen Druckmitteleinlasses mit einer an dem Achskörper 14 vorhandenen Druckmittelleitung auch anders ausgestaltet sein kann. So ist es denkbar, die Druckmittelleitung durch den Achskörper 14 zu führen, etwa durch eine in dem Achskörper 14 ausgebildete Bohrung, und die Austrittsöffnung der Druckmittelleitung mit einem an der Mantelfläche 28 des Wellendichtrings vorgesehenen Druckmitteleinlass in Deckung zu bringen. Im gezeigten Beispiel führt die Leitung 52 durch den Grundkörper 26 hindurch bis zu einem an der Mantelfläche 32 vorgesehenen Auslass 56, der in den äußeren Hohlraum 38 mündet. In der Nabe 12 ist eine Druckmittelleitung 58 vorgesehen, die über eine Öffnung 57 in der Mantelfläche 44 in Fluidverbindung mit dem äußeren Hohlraum 38 steht und in ihrem weiteren Verlauf beispielsweise durch eine hier nicht dargestellte Felge bis hin zu einem Ventil eines auf der Felge montierten Reifens führt. Die Druckmittelleitung 58 kann z.B. durch eine zumindest teilweise in der Nabe ausgebildete Bohrung realisiert sein und dreht sich bei einer Drehbewegung der Nabe 12 um den Achskörper 14 mit der Nabe 12 mit.

Mit der dargestellten Anordnung ist es möglich, ein von der Druckmittelquelle über die Druckmittelleitung 46 zugeleitetes Druckmittel, beispielsweise Druckluft oder ein Reifenfüllmittel, über die Leitung 52 in den äußeren Hohlraum 38 zu führen und von dort aus - unabhängig von der jeweiligen Drehstellung der Nabe 12 - in die Druckmittelleitung 58 weiterzuleiten. Auch eine Führung des Druckmittels in der entgegengesetzten Richtung ist möglich, z.B. um überschüssigen Druck aus einem Fahrzeugreifen abzulassen. Auch bei einer Drehbewegung der Nabe 12 um den Achskörper 14 ist die Druckmittelleitung 58 mittels des Wellendichtrings 24 stets druckdicht und fluidleitend mit der Druckmittelleitung 46 gekoppelt, so dass eine Druckmittelzu- oder -abfuhr nicht nur im Stillstand des Fahrzeugs vorgenommen werden kann, sondern auch während der Fahrt bei sich drehender Nabe 12 möglich ist. Mit der beschriebenen Anordnung kann daher eine fahrzeugautonome Reifendruckregulierung einfach und mit geringen Bauraumanforderungen realisiert werden.

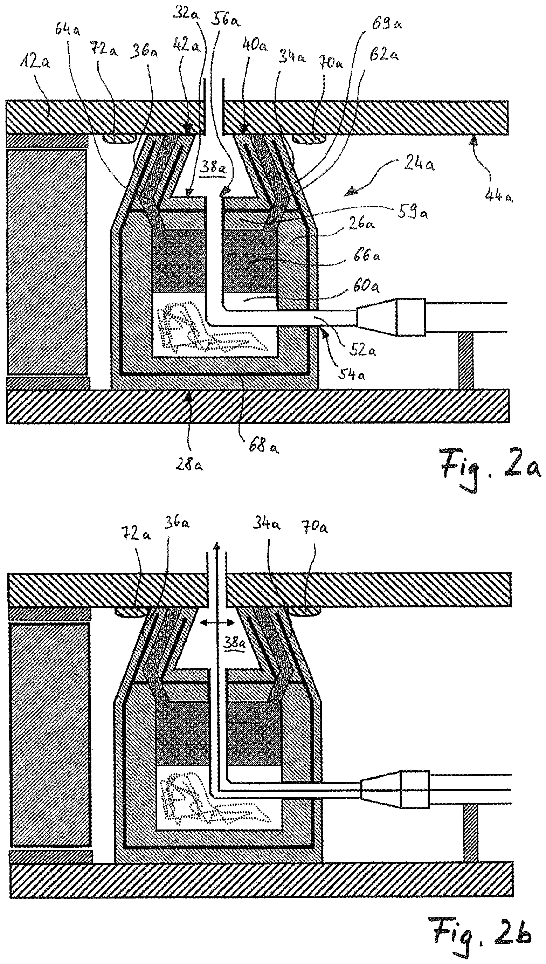

Bezüglich weiterer Ausgestaltungen des Wellendichtrings 24 wird nun auf die Figuren 2 bis 9 verwiesen, welche jeweils anhand einer geschnittenen Detailansicht für den in der oberen Hälfte in Figur 1 gezeigten Bereich der Fahrzeugachsbaugruppe 10 unterschiedliche Ausführungsbeispiele veranschaulichen. Dabei zeigt jeweils die mit dem Suffix "a" bezeichnete Figur den Zustand der Anordnung bei Normaldruck und die mit dem Suffix "b" bezeichnete Figur den Zustand derselben Anordnung bei einem in dem äußeren Hohlraum 38 herrschenden Überdruck. Gleiche oder gleich wirkende Elemente sind in allen Figuren mit gleichen Bezugszeichen bezeichnet, jeweils ergänzt um einen eigenen Kleinbuchstaben zur Unterscheidung der Ausführungsbeispiele. Soweit sich nachstehend nichts anderes ergibt, sei zur Erläuterung von Elementen mit Bezugszeichen gleicher Nummer auf die jeweils vorstehenden Erläuterungen verwiesen.

Der in den Figuren 2a und 2b dargestellte Wellendichtring 24a unterscheidet sich von dem in Figur 1 gezeigten Beispiel dadurch, dass er zusätzlich einen inneren Hohlraum 60a aufweist, der von dem äußeren Hohlraum 38a durch eine dem Grundkörper 26a zugehörige Trennwand 59a druckdicht getrennt ist. Der Auslass 56a ist in diesem Beispiel in der Trennwand 59a angeordnet und die Leitung 52a ist teilweise durch den inneren Hohlraum 60a geführt. Durch die gepunkteten Schlangenlinien ist in der Darstellung der Figuren 2a und 2b angedeutet, dass der innere Hohlraum 60a mit einem Schmiermittel befüllt ist. Um in dem inneren Hohlraum 60a vorhandenes Schmiermittel zu den Gleitflächen 40a und 42a der Umfangsdichtlippen 34a und 36a führen zu können, sind Schmiermittelkanäle 62a und 64a vorgesehen, die sich aus dem inneren Hohlraum 60a in im Wesentlichen radialer Richtung durch die Umfangsdichtlippen 34a und 36a erstrecken und an deren Gleitflächen 40a und 42a enden. Der innere Hohlraum 60a dient somit als Schmiermitteldepot, welches nach und nach Schmiermittel zur Schmierung der auf der Mantelfläche 44a der Nabe 12a gleitenden Umfangsdichtlippen 34a und 36a abgibt.

In dem inneren Hohlraum 60a ist zudem ein schwammartiger Schaumstoff 66a vorhanden, der einen radial äußeren Bereich des inneren Hohlraums 60a ausfüllt und die Eintrittsöffnungen der Schmiermittelkanäle 62a und 64a überdeckt. Der Schaumstoff 66a stellt sicher, dass in dem inneren Hohlraum 60a befindliches Schmiermittel nicht ungebremst durch die Schmiermittelkanäle 62a und 64a abfließt, sondern zunächst von dem Schaumstoff 66a aufgenommen und gespeichert wird, um dann allmählich in die Schmiermittelkanäle 62a und 64a abgegeben zu werden. Im gezeigten Beispiel sind auch die Schmiermittelkanäle 62a und 64a selbst mit schwammartigem Schaumstoff ausgefüllt, jedoch ist dies lediglich optional.

Um seine Formstabilität zu verbessern, weist der Wellendichtring 24a einen in seinem Grundkörper 26a eingebetteten, ringförmigen Kern 68a auf, der einen an die Querschnittsform des Grundkörpers 26a angepassten, hier im Wesentlichen rechteckigen Querschnitt hat, um den Grundkörper 26a im Bereich zwischen der inneren Mantelfläche 28a und der äußeren Mantelfläche 32a zu versteifen, und der sich mit Armen 69a in einen Bereich erstreckt, von dem sich die Umfangsdichtlippen 34a und 36a erstrecken, wobei die Arme 69a insbesondere bis in die Umfangsdichtlippen 34a und 36a hinein verlängert sind. Der Kern 68a bewirkt damit nicht nur eine Verstärkung des Grundkörpers 26a, sondern auch eine Stabilisierung der Umfangsdichtlippen 34a und 36a derart, dass sie einem Überdruck in dem äußeren Hohlraum 38a besser standhalten und insbesondere nicht seitlich nach außen umklappen können.

Um einer übermäßigen axialen Auseinanderbewegung der Umfangsdichtlippen 34a und 36a bei einem Überdruck in dem äußeren Hohlraum 38a zusätzlich entgegenzuwirken, sind an der Mantelfläche 44a der Nabe 12a sich in Umfangsrichtung der Nabe 12a erstreckende Rippen oder Vorsprünge 70a und 72a vorhanden, an die sich die bei einem Überdruck in dem äußeren Hohlraum 38a elastisch verformenden Umfangsdichtlippen 34a und 36a stützend anlegen können. Diese Situation ist in Figur 2b dargestellt. Die Vorsprünge 70a, 72a können in Umfangsrichtung durchgehend oder unterbrochen ausgeführt sein.

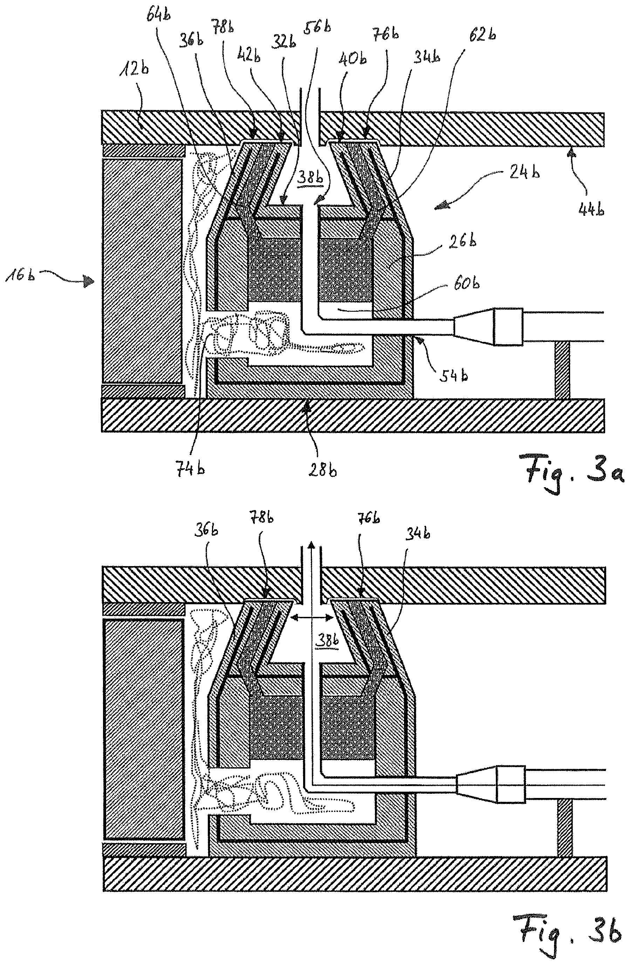

Die Figuren 3a und 3b zeigen ein gegenüber den Figuren 2a und 2b leicht modifiziertes Ausführungsbeispiel. Der hier dargestellte Wellendichtring 24b unterscheidet sich von dem Beispiel der Figuren 2a und 2b dadurch, dass die dem Kugellager 16b zugewandte seitliche Außenwand des Grundkörpers 26b eine Schmiermitteleintrittsöffnung 74b aufweist, die in den inneren Hohlraum 60b führt. Im Bereich des Kugellagers 16b vorhandenes Schmiermittel kann so durch die Schmiermitteleintrittsöffnung 74b in den inneren Hohlraum 60b eintreten und sich von dort durch die Schmiermittelkanäle 62b und 64b bis zu den Gleitflächen 40b und 42b der Umfangsdichtlippen 34b und 36b verteilen.

Ferner unterscheidet sich das Ausführungsbeispiel der Figuren 3a und 3b von dem der Figuren 2a und 2b dadurch, dass die Umfangsdichtlippen 34b und 36b radial etwas länger ausgebildet sind und in auf der Mantelfläche 44b der Nabe 12b vorhandene, sich in Umfangsrichtung der Nabe 12b erstreckende Ringnuten 76b und 78b hineinragen. Bei einem Überdruck in dem äußeren Hohlraum 38b werden die Umfangsdichtlippen 34b und 36b - wie in Figur 3b dargestellt - gegen die seitlichen Wände der Ringnuten 76b und 78b gedrückt. Eine übermäßige axiale Auseinanderbewegung oder ein Umklappen der beiden Umfangsdichtlippen 34b und 36b wird durch diese Abstützung wirksam verhindert.

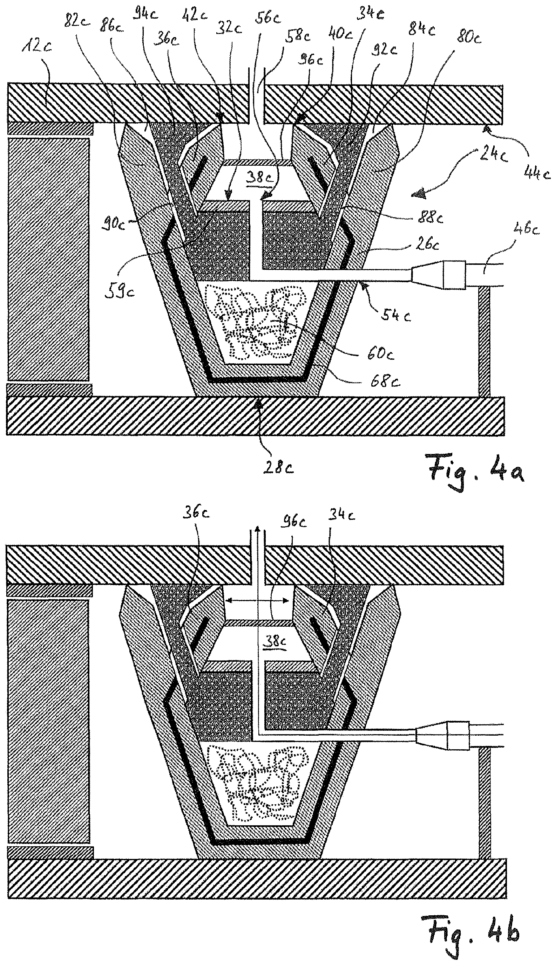

Ein anderes Ausführungsbeispiel ist in den Figuren 4a und 4b veranschaulicht. Der hier gezeigte Wellendichtring 24c unterscheidet sich von dem Beispiel der Figuren 2a und 2b im Wesentlichen dadurch, dass benachbart zu den beiden Umfangsdichtlippen 34c und 36c jeweils eine zusätzliche, sich radial erstreckende Umfangsdichtlippe 80c bzw. 82c vorhanden ist. Zwischen den jeweils benachbarten Umfangsdichtlippen 34c und 80c bzw. 36c und 82c sind somit ringförmige Zwischenräume 84c und 86c gebildet. Die aus dem inneren Hohlraum 60c herausführenden Schmiermittelkanäle 88c und 90c erstrecken sich in diesem Ausführungsbeispiel nicht bis an die Gleitflächen 40c und 42c der Umfangsdichtlippen 34c und 36c, sondern münden in den Zwischenräumen 84c und 86c. Die Zwischenräume 84c und 86c sind optional nahezu vollständig mit schwammartigem Schaumstoff 92c und 94c ausgefüllt, der bewirkt, dass durch die Kanäle 88c und 90c in die Zwischenräume 84c und 86c gelangtes Schmiermittel zunächst aufgenommen wird und anschließend gleichmäßig an die Gleitflächen der Umfangsdichtlippen 34c, 36c, 80c und 82c und die Mantelfläche 44c der Nabe 12c verteilt wird.

Des Weiteren unterscheidet sich das Ausführungsbeispiel der Figuren 4a und 4b von dem der Figuren 2a und 2b dadurch, dass die den inneren Hohlraum 60c und den äußeren Hohlraum 38c voneinander trennende Wand 59c nicht einstückig mit dem Grundkörper 26c ausgebildet ist, sondern durch ein ringförmiges, in dem Material des Grundkörpers 26c befestigtes, beispielsweise aus Kunststoff oder Metall bestehendes separates Band. Auch der in den Grundkörper 26c eingebettete, versteifende Kern 68c weist hier eine andere Form auf als in dem Beispiel der Figuren 2a und 2b und hat einen trapezförmigen Querschnitt, der der Querschnittsform des Grundkörpers 26c angepasst ist.

Darüber hinaus sind in diesem Beispiel die den äußeren Hohlraum 38c begrenzenden Umfangsdichtlippen 34c und 36c durch ein Verbindungselement 96c axial miteinander gekoppelt. Das Verbindungselement 96c gewährleistet, dass die Umfangsdichtlippen 34c und 36c bei einem Überdruck in dem äußeren Hohlraum 38c zusammengehalten werden. Das Verbindungselement 96c kann in Umfangsrichtung durchgehend sein und wenigstens eine Öffnung aufweisen, damit Druckmittel aus der Druckmittelleitung 46c durch den äußeren Hohlraum 38c in die Druckmittelleitung 58c gelangen kann. Es können anstelle eines durchgehenden Verbindungselements aber auch mehrere einzelne, in Umfangsrichtung voneinander beabstandete Verbindungselemente zwischen den Umfangsdichtlippen 34c und 36c befestigt sein, beispielsweise in Form einzelner Stege oder Stifte. Das Verbindungselement 96c oder mehrere Verbindungselemente können als jeweils separates Teil oder einstückig mit dem Grundkörper 26c ausgeführt sein.

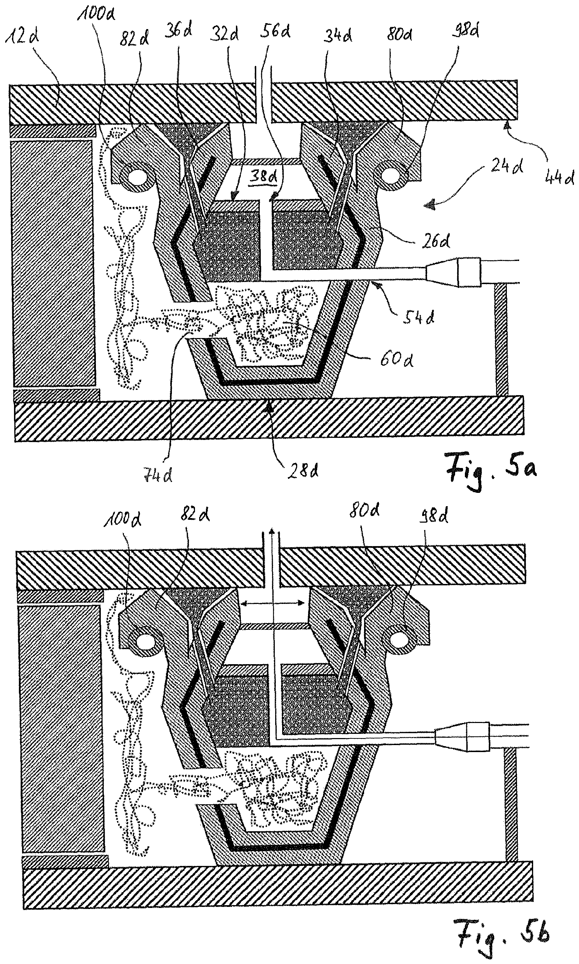

Die Figuren 5a und 5b zeigen eine Weiterbildung des Ausführungsbeispiels der Figuren 4a und 4b. Der hier dargestellte Wellendichtring 24d unterscheidet sich von dem vorigen Beispiel dadurch, dass - ähnlich wie bereits in den Figuren 3a und 3b gezeigt - in der dem Kugellager 16d zugewandten seitlichen Außenwand des Grundkörpers 26d eine Schmiermitteleintrittsöffnung 74d vorhanden ist, durch die ein im Bereich des Kugellagers 16d vorhandenes Schmiermittel in den inneren Hohlraum 60d eintreten kann.

Weiter unterscheidet sich das Beispiel der Figuren 5a und 5b von dem der Figuren 4a und 4b darin, dass an den zusätzlichen Umfangsdichtlippen 80d und 82d Schlauchfedern 98d, 100d angebracht sind, die die Umfangsdichtlippen 80d und 82d gegen die Mantelfläche 44d der Nabe 12d drücken. Auf diese Weise wird eine noch bessere Dichtungswirkung erzielt.

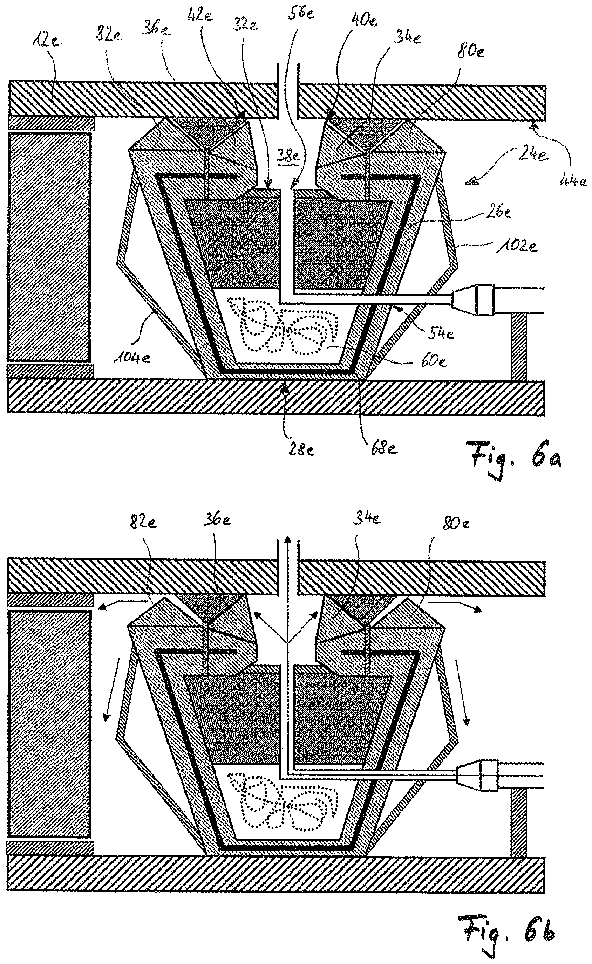

Die Figuren 6a und 6b zeigen einen Wellendichtring 24e, der sich von dem Beispiel der Figuren 4a und 4b im Wesentlichen dadurch unterscheidet, dass die seitlichen Außenwände des Grundkörpers 26e durch außerhalb der seitlichen Außenwände an dem Grundkörper 26e angebrachte Versteifungselemente 102e bzw. 104e stabilisiert sind. Die Versteifungselemente 102e bzw. 104e können beispielsweise durch Ringe aus Federblech gebildet sein, die an den seitlichen Außenwänden des Grundkörpers 26e befestigt sind bzw. sich daran abstützen.

Kennzeichnend für dieses Ausführungsbeispiel ist weiter, dass - wie aus Figur 6a ersichtlich - die Gleitflächen 40e und 42e der Umfangsdichtlippen 34e und 36e bei einem Normaldruck in dem äußeren Hohlraum 38e nicht in Kontakt mit der Mantelfläche 44e der Nabe 12e sind, sondern lediglich die Gleitflächen der jeweils benachbarten Umfangsdichtlippen 80e und 82e. Der im Grundkörper 26e aufgenommene, versteifende Kern 68e ist hier außerdem lediglich in einen Bereich verlängert, von dem sich die Umfangsdichtlippen 34e, 36e, 80e und 82e erstrecken, reicht jedoch nicht in die Umfangsdichtlippen 34e, 36e, 80e und 82e selbst hinein. Bei einem Überdruck in dem äußeren Hohlraum 38e - wie in Figur 6b dargestellt - kippen die Umfangsdichtlippen 34e, 36e, 80e und 82e derart nach außen, dass nun die Umfangsdichtlippen 34e und 36e mit ihren Gleitflächen 40e und 42e die Mantelfläche 44e der Nabe 12e dichtend kontaktieren, nicht jedoch die Gleitflächen der Umfangsdichtlippen 80e und 82e. Die Versteifungselemente 102e und 104e stabilisieren den Grundkörper 26e bei dieser Kippbewegung.

Schließlich unterscheidet sich dieses Beispiel von dem der Figuren 4a und 4b dadurch, dass die den äußeren Hohlraum 38e begrenzenden Umfangsdichtlippen 34e und 36e nicht axial miteinander gekoppelt sind.

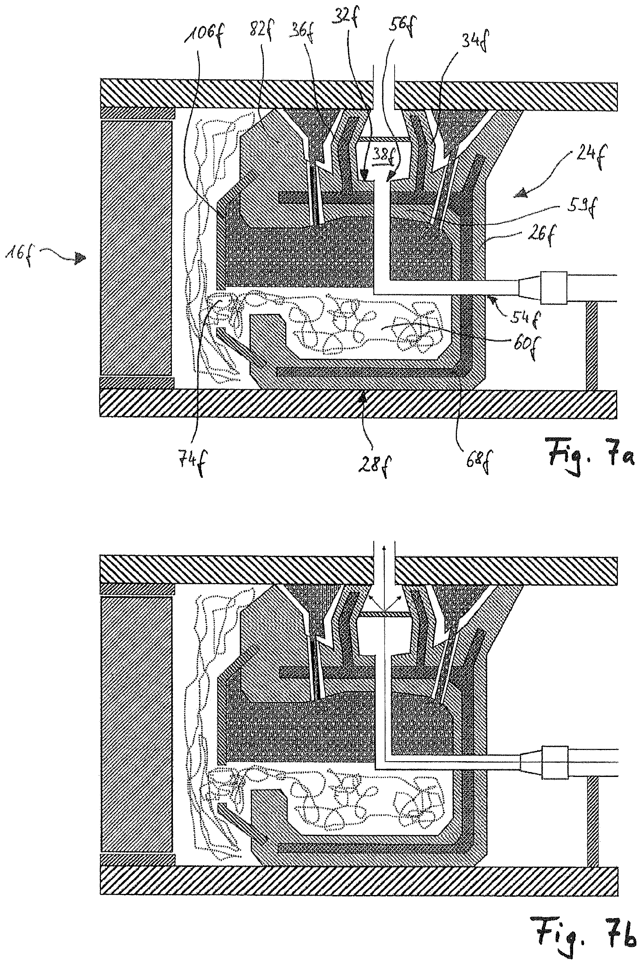

Eine weitere, nicht erfindungsgemäße Variante ist in den Figuren 7a und 7b veranschaulicht. Der hier gezeigte Wellendichtring 24f unterscheidet sich von dem Ausführungsbeispiel der Figuren 4a und 4b im Wesentlichen dadurch, dass zum einen die den inneren Hohlraum 60f und den äußeren Hohlraum 38f trennende Wand 59f einstückig mit dem Grundkörper 26f ausgebildet ist und zum anderen die dem Kugellager 16f zugewandte seitliche Außenwand des Wellendichtrings 24f nicht materialeinheitlich mit dem Grundkörper 26f ausgebildet ist, sondern durch eine separate, an dem Grundkörper 26f angebrachte ringförmige Abdeckung 106f. Die Abdeckung 106f kann beispielsweise durch ein ringförmiges Federblech realisiert sein, das zwischen die die Mantelflächen 28f und 32f des Grundkörpers 26f bildenden Außenwände des Grundkörpers 26f geklemmt ist. Bei entsprechender Ausgestaltung kann die Abdeckung 106f eine den Schlauchfedern 98d bzw. 100d aus dem Beispiel der Figuren 5a und 5b vergleichbare, auf die Umfangsdichtlippen 36f und 82f wirkende Anpresskraft erzeugen. Im gezeigten Beispiel weist die Abdeckung 106f eine oder mehrere Schmiermitteleintrittsöffnungen 74f auf, durch welche im Bereich des Kugellagers 16f vorhandenes Schmiermittel in den inneren Hohlraum 60f gelangen kann. Die Querschnittsform des Grundkörpers 26f in diesem Beispiel bedingt zudem, dass der in dem Grundkörper 26f eingebettete, versteifende Kern 68f einen annähernd U-förmigen Querschnitt hat.

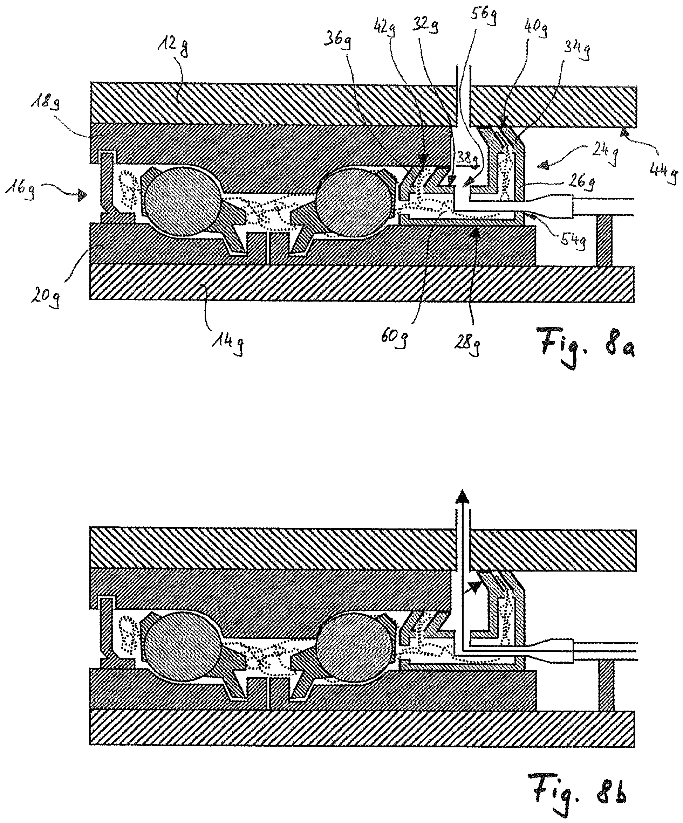

Die Figuren 8a und 8b schließlich zeigen einen Wellendichtring 24g, dessen den äußeren Hohlraum 38g begrenzende Umfangsdichtlippen 34g und 36g eine unterschiedliche radiale Erstreckung aufweisen. Der Wellendichtring 24g ist in ein Kugellager 16g, beispielsweise in ein sogenanntes Kompaktlager, integriert. Der an dem Achskörper 14g fixierte Laufring 20g des Kugellagers 16g hat hier eine längere axiale Erstreckung als der an der Nabe 12g fixierte Laufring 18g, so dass der Laufring 20g wie dargestellt axial über den Laufring 18g hinaussteht. Die Mantelfläche 28g des Wellendichtringgrundkörpers 26g haftet an dem überstehenden Teil des Laufrings 20g beispielsweise durch Reibschluss. Die Umfangsdichtlippe 36g an der dem Kugellager 16g zugewandten Seite des Wellendichtrings 24g erstreckt sich radial bis zum Laufring 18g, so dass die Gleitfläche 42g dichtend mit dem Laufring 18g in Kontakt ist. Die andere Umfangsdichtlippe 34g an der dem Kugellager 16g abgewandten Seite des Wellendichtrings 24g erstreckt sich radial weiter nach außen bis zur Nabe 12g, so dass die Gleitfläche 40g der Umfangsdichtlippe 34g dichtend mit der Mantelfläche 44g der Nabe 12g in Kontakt steht. Abgesehen von der unterschiedlichen radialen Erstreckung der Umfangsdichtlippen 34g und 36g gleicht der Aufbau des Wellendichtrings 24g im Wesentlichen dem Wellendichtring 24b der Figuren 3a und 3b.

Aus den vorstehenden Erläuterungen sollte klar geworden sein, dass die in Bezug auf die Figuren 1 bis 8 beschriebenen Merkmale beliebig miteinander kombiniert werden können und die dargestellten Ausführungsbeispiele lediglich beispielhaft sind. Dies gilt sowohl für die auf den jeweiligen Wellendichtring bezogenen Merkmale, als auch für die Merkmale der anderen Komponenten der dargestellten Fahrzeugachsbaugruppe, wie etwa das Kugellager, den Achskörper oder die Nabe. So ist es ohne weiteres möglich, die aus den Figuren 2 und 3 ersichtlichen, an der Nabe vorhandenen Rippen bzw. Ringnuten ebenso in den Ausführungsbeispielen der anderen Figuren vorzusehen. Auch die nur anhand einzelner Figuren beschriebenen Merkmale der Wellendichtringe, wie beispielsweise die separate seitliche Abdeckung, die seitlichen Versteifungselemente, die die Umfangsdichtlippen axial miteinander koppelnden Verbindungselemente, die in einer seitlichen Außenwand vorgesehenen Schmiermitteleintrittsöffnungen oder die sich radial unterschiedlich weit erstreckenden Umfangsdichtlippen können ebenfalls einfach mit den Ausführungsbeispielen der anderen Figuren kombiniert werden. Gleiches gilt ebenso für die weiteren Merkmale der beschriebenen Wellendichtringe. So können etwa die beiderseits des äußeren Hohlraums vorhandenen doppelten Umfangsdichtlippen, die unterschiedlichen Ausbildungen der Schmiermittelkanäle, der versteifenden Kerne oder der den inneren und den äußeren Hohlraum trennenden Wände, oder auch die unterschiedlichen Füllungen mit schwammartigem Schaumstoff auch bei den Wellendichtringen derjenigen Figuren vorgesehen sein, in denen diese Merkmale nicht gezeigt sind.

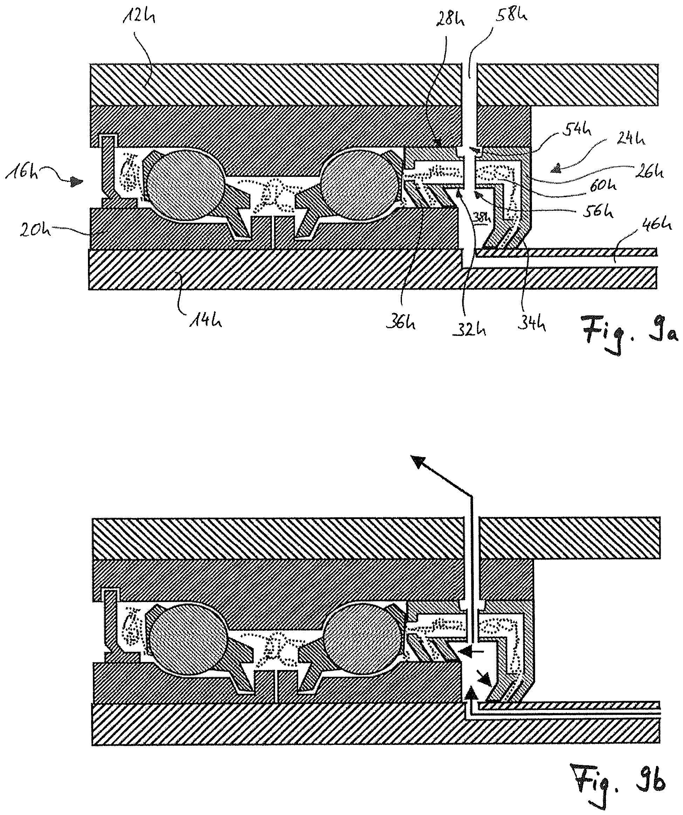

Auch versteht es sich, dass die in den Figuren 1 bis 8 gezeigten Ausbildungen der Wellendichtringe nur exemplarisch sind. Dem Fachmann ist klar, dass die Wellendichtringe auch anders ausgebildet und angeordnet sein können. So ist es leicht möglich, die Wellendichtringe in im Vergleich zu den Figuren 1 bis 8 umgekehrter Weise auszubilden, so dass ihre Umfangsdichtlippen an der radial inneren Mantelfläche ausgebildet sind. Solche Wellendichtringe haften dann radial außen an der Nabe und gleiten bei einer Drehbewegung der Nabe mit ihren Umfangsdichtlippen auf dem Achskörper. Entsprechend würde die an dem Achskörper vorhandene Druckmittelleitung innerhalb des Achskörpers geführt sein und der Druckmitteleinlass des Wellendichtrings so angeordnet sein, dass er fluidleitend mit der an der Nabe vorhandenen Druckmittelleitung in Verbindung steht. Ein solcher Fall ist beispielhaft in den Figuren 9a und 9a veranschaulicht. Die Umfangsdichtlippen 34h und 36h des hier gezeigten, in ein Kugellager 16h integrierten Wellendichtrings 24h sind an der radial inneren Mantelfläche 32h ausgebildet und gleiten bei einer Drehbewegung der Nabe 12h auf dem Achskörper 14h bzw. auf dem Laufring 20h des Kugellagers 16h. Die Druckmittelleitung 46h ist innerhalb des Achskörpers 14h geführt und steht fluidleitend in Verbindung mit dem äußeren Hohlraum 38h des Wellendichtrings 24h. Der Druckmitteleinlass 54h ist in der die radial äußere Mantelfläche 28h bildenden Außenwand des Wellendichtrings 24h ausgebildet und mit der in der Nabe 12h vorhandenen Druckmittelleitung 58h zur Deckung gebracht.

Grundsätzlich sind auch Anwendungsbeispiele denkbar, bei denen sich eine Welle in einem feststehenden Wellengehäuse dreht. Auch bei solchen Anwendungsbeispielen ist es möglich, dass die Umfangsdichtlippen an der radial inneren Mantelfläche eines Wellendichtrings gebildet sind und mit ihren Gleitflächen die Welle dichtend kontaktieren, während die radial äußeren Mantelfläche des Wellendichtrings an dem Wellengehäuse haftet. Auch der umgekehrte Fall ist möglich, wenn ein Wellendichtring mit seiner radial inneren Mantelfläche an der Welle haftet und sich bei einer Drehbewegung derselben mit dieser mit dreht, während die Umfangsdichtlippen an der radial äußeren Mantelfläche des Wellendichtrings an dem Wellengehäuse gleiten. In beiden Fällen können an der Welle und am Wellengehäuse entsprechende Druckmittelleitungen vorhanden sein, die über geeignet angeordnete Druckmitteleinlässe der Wellendichtringe und deren durch die Umfangsdichtlippen begrenzten, äußeren Hohlräume fluidleitend miteinander verbunden sind.

## Patentansprüche

1. Wellendichtring (24a-24e; 24g, 24h), mit
- einem ringförmigen Grundkörper (26a-26e; 26g, 26h), dessen eine Mantelfläche (28a-28e; 28g, 28h) eine in Umfangsrichtung verlaufende Dichtfläche bildet und von dessen entgegengesetzter, anderer Mantelfläche (32a-32e; 32g, 32h) sich radial wenigstens zwei Umfangsdichtlippen (34a-34e; 34g, 34h, 36a-36e; 36g, 36h) erstrecken, zwischen denen ein nach außen offener, äußerer Hohlraum (38a-38e; 38g, 38h) begrenzt ist, und mit
- einem Druckmitteleinlass (54a-54e; 54g, 54h) in einer Außenwand des Grundkörpers (26a-26e; 26g, 26h) und einem Druckmittelauslass (56a-56e; 56g, 56h), der in den äußeren Hohlraum (38a-38e; 38g, 38h) mündet und in Fluidverbindung mit dem Einlass (54a-54e; 54g, 54h) steht,
wobei der Grundkörper (26a-26e; 26g, 26h) einen inneren Hohlraum (60a-60e; 60g, 60h) aufweist, der von dem äußeren Hohlraum (38a-38e; 38g, 38h) druckdicht getrennt ist, und wobei die den inneren Hohlraum (60a-60e; 60g, 60h) begrenzenden seitlichen Außenwände des Wellendichtrings (24a-24e; 24g, 24h) durch den Grundkörper (26a-26e; 26g, 26h) gebildet sind.

2. Wellendichtring (24a-24e; 24g, 24h) nach Anspruch 1,
**dadurch gekennzeichnet, dass** der Auslass (56a-56e; 56g, 56h) in einer den inneren und den äußeren Hohlraum (60a-60e; 60g, 60h, 38a-38e; 38g, 38h) voneinander trennenden Wand (59a; 59c) angeordnet ist.

3. Wellendichtring (24a; 24b; 24g; 24h) nach Anspruch 1 oder 2,
**dadurch gekennzeichnet, dass** sich zumindest ein Schmiermittelkanal (62a; 62b, 64a; 64b) aus dem inneren Hohlraum (60a; 60b; 60g; 60h) in mindestens eine der wenigstens zwei Umfangsdichtlippen (34a; 34b; 34g; 34h, 36a; 36b; 36g; 36h) erstreckt, der an einer Gleitfläche (40a; 40b; 40g, 42a; 42b; 42g) der mindestens einen Umfangsdichtlippe (34a; 34b; 34g; 34h, 36a; 36b; 36g; 36h) mündet.

4. Wellendichtring (24c-24e) nach einem der Ansprüche 1 bis 3,
**dadurch gekennzeichnet, dass** benachbart zu mindestens einer der wenigstens zwei Umfangsdichtlippen (34c-34e, 36c-36e) eine weitere sich radial erstreckende Umfangsdichtlippe (80c-80e, 82c-82e) vorhanden ist, wobei zwischen jeder weiteren Umfangsdichtlippe (80c-80e, 82c-82e) und einer benachbarten der wenigstens zwei Umfangsdichtlippen (34c-34e, 36c-36e) ein Zwischenraum (84c, 86c) vorhanden ist.

5. Wellendichtring (24c-24e) nach Anspruch 4,
**dadurch gekennzeichnet, dass** sich zumindest ein Schmiermittelkanal (88c, 90c) aus dem inneren Hohlraum (60c-60e) in den Zwischenraum (84c, 86c) zwischen zwei benachbarten Umfangsdichtlippen (34c-34e, 36c-36e, 80c-80e, 82c-82e) erstreckt.

6. Wellendichtring (24c-24e) nach Anspruch 5,
**dadurch gekennzeichnet, dass** der Zwischenraum (84c, 86c) zwischen den benachbarten Umfangsdichtlippen (34c-34e, 36c-36e, 80c-80e, 82c-82e) zumindest teilweise mit einem schwammartigen Schaumstoff (92c, 94c) ausgefüllt ist.

7. Wellendichtring (24a-24e) nach einem der Ansprüche 3 bis 6,
**dadurch gekennzeichnet, dass** in dem inneren Hohlraum (60a-60e) ein schwammartiger Schaumstoff (66a) vorhanden ist, der wenigstens einen Teil des inneren Hohlraums (60a-60e) ausfüllt und eine Eintrittsöffnung des zumindest einen Schmiermittelkanals (62a; 62b, 64a; 64b, 88c, 90c) überdeckt.

8. Wellendichtring (24a-24e; 24g, 24h) nach einem der Ansprüche 3 bis 7,
**dadurch gekennzeichnet, dass** der innere Hohlraum (60a-60e; 60g, 60h) ein Schmiermittel enthält.

9. Wellendichtring (24b; 24d; 24g; 24h) nach einem der vorhergehenden Ansprüche,
**dadurch gekennzeichnet, dass** eine seitliche Außenwand des Grundkörpers (26b; 26d; 26g; 26h) wenigstens eine Schmiermitteleintrittsöffnung (74b; 74d) aufweist, die in den inneren Hohlraum (60b; 60d; 60g; 60h) führt.

10. Wellendichtring (24a-24e) nach einem der vorhergehenden Ansprüche,
**dadurch gekennzeichnet, dass** ein im Grundkörper (26a-26e) aufgenommener, den Grundkörper (26a-26e) versteifender Kern (68a; 68c; 68e) in einen Bereich verlängert ist, von dem sich wenigstens eine Umfangsdichtlippe (34a-34e, 36a-36e, 80c-80e, 82c-82e) erstreckt.

11. Wellendichtring (24a-24d) nach Anspruch 10,
**dadurch gekennzeichnet, dass** der versteifende Kern (68a; 68c) in wenigstens eine Umfangsdichtlippe (34a-34d, 36a-36d, 80c; 80d, 82c; 82d) hinein verlängert ist.

12. Wellendichtring (24a-24d) nach Anspruch 11,
**dadurch gekennzeichnet, dass** ein in einer der Umfangsdichtlippen (34a-34d, 36a-36d, 80c; 80d, 82c; 82d) vorhandener Abschnitt (69a) des Kerns (68a; 68c) bezüglich des übrigen Kerns (68a; 68c) schwenkbar ist.

13. Wellendichtring (24e) nach einem der vorhergehenden Ansprüche,
**dadurch gekennzeichnet, dass** eine seitliche Außenwand des Grundkörpers (26e) durch ein außerhalb der seitlichen Außenwand an dem Grundkörper (26e) angebrachtes Versteifungselement (102e, 104e) stabilisiert ist.

14. Wellendichtring (24c; 24d) nach einem der vorhergehenden Ansprüche,
**dadurch gekennzeichnet, dass** die den äußeren Hohlraum (38c; 38d) begrenzenden Umfangsdichtlippen (34c; 34d, 36c; 36d) durch wenigstens ein Verbindungselement (96c) axial miteinander gekoppelt sind.

15. Wellendichtring (24g; 24h) nach einem der vorhergehenden Ansprüche,
**dadurch gekennzeichnet, dass** die den äußeren Hohlraum (38g; 38h) begrenzenden Umfangsdichtlippen (34g; 34h, 36g; 36h) eine unterschiedliche radiale Erstreckung aufweisen.

## Claims

1. A shaft seal (24a-24e; 24g, 24h), including
- an annular base body (26a-26e; 26g, 26h) whereof one lateral surface (28a-28e; 28g, 28h) forms a circumferential sealing surface and whereof the other, opposing, lateral surface (32a-32e; 32g, 32h) has at least two circumferential sealing lips (34a-34e; 34g, 34h, 36a-36e; 36g, 36h) extending radially therefrom, between which an outwardly open outer cavity (38a-38e; 38g, 38h) is delimited, and including
- a pressure-medium inlet (54a-54e; 54g, 54h) in an outer wall of the base body (26a-26e; 26g, 26h) and a pressure-medium outlet (56a-56e; 56g, 56h), which leads into the outer cavity (38a-38e; 38g, 38h) and is in fluid connection with the inlet (54a-54e; 54g, 54h),
wherein the base body (26a-26e; 26g, 26h) has an inner cavity (60a-60e; 60g, 60h) which is separated from the outer cavity (38a-38e; 38g, 38h) in pressure-tight manner, and wherein the lateral outer walls of the shaft seal (24a-24e; 24g, 24h) which delimit the inner cavity (60a-60e; 60g, 60h) are formed by the base body (26a-26e; 26g, 26h).

2. A shaft seal (24a-24e; 24g, 24h) according to Claim 1,
**characterized in that** the outlet (56a-56e; 56g, 56h) is arranged in a wall (59a; 59c) separating the inner and the outer cavity (60a-60e; 60g, 60h, 38a-38e; 38g, 38h) from one another.

3. A shaft seal (24a; 24b; 24g; 24h) according to Claim 1 or 2,
**characterized in that** at least one lubricant channel (62a; 62b, 64a; 64b) extends from the inner cavity (60a; 60b; 60g; 60h) into at least one of the at least two circumferential sealing lips (34a; 34b; 34g; 34h, 36a; 36b; 36g; 36h), which leads to a sliding surface (40a; 40b; 40g, 42a; 42b; 42g) of the at least one circumferential sealing lip (34a; 34b; 34g; 34h, 36a; 36b; 36g; 36h).

4. A shaft seal (24c-24e) according to one of Claims 1 to 3,
**characterized in that**, adjacent to at least one of the at least two circumferential sealing lips (34c-34e, 36c-36e), there is a further radially extending circumferential sealing lip (80c-80e, 82c-82e), with a clearance (84c, 86c) being present between each further circumferential sealing lip (80c-80e, 82c-82e) and an adjacent circumferential sealing lip of the at least two circumferential sealing lips (34c-34e, 36c-36e).

5. A shaft seal (24c-24e) according to Claim 4,
**characterized in that** at least one lubricant channel (88c, 90c) extends from the inner cavity (60c-60e) into the clearance (84c, 86c) between two adjacent circumferential sealing lips (34c-34e, 36c-36e, 80c-80e, 82c-82e).

6. A shaft seal (24c-24e) according to Claim 5,
**characterized in that** the clearance (84c, 86c) between the adjacent circumferential sealing lips (34c-34e, 36c-36e, 80c-80e, 82c-82e) is filled at least partially with a spongy foam material (92c, 94c).

7. A shaft seal (24a-24e) according to one of Claims 3 to 6,
**characterized in that**, present in the inner cavity (60a-60e), there is a spongy foam material (66a) which fills at least part of the inner cavity (60a-60e) and covers an entry opening of the at least one lubricant channel (62a; 62b, 64a; 64b, 88c, 90c).

8. A shaft seal (24a-24e; 24g, 24h) according to one of Claims 3 to 7, **characterized in that** the inner cavity (60a-60e; 60g, 60h) contains a lubricant.

9. A shaft seal (24b; 24d; 24g; 24h) according to one of the preceding claims,
**characterized in that** a lateral outer wall of the base body (26b; 26d; 26g; 26h) has at least one lubricant entry opening (74b; 74d), which leads into the inner cavity (60b; 60d; 60g; 60h).

10. A shaft seal (24a-24e) according to one of the preceding claims,
**characterized in that** a core (68a; 68c; 68e), which is received in the base body (26a-26e) and reinforces the base body (26a-26e), is elongated into a region from which at least one circumferential sealing lip (34a-34e, 36a-36e, 80c-80e, 82c-82e) extends.

11. A shaft seal (24a-24d) according to Claim 10,
**characterized in that** the reinforcing core (68a; 68c) is elongated into at least one circumferential sealing lip (34a-34d, 36a-36d, 80c; 80d, 82c; 82d).

12. A shaft seal (24a-24d) according to Claim 11,
**characterized in that** a portion (69a) of the core (68a; 68c) which is present in one of the circumferential sealing lips (34a-34d, 36a-36d, 80c; 80d, 82c; 82d) can be pivoted with respect to the remainder of the core (68a; 68c).

13. A shaft seal (24e) according to one of the preceding claims,
**characterized in that** a lateral outer wall of the base body (26e) is stabilised by a reinforcing element (102e, 104e) mounted outside the lateral outer wall on the base body (26e).

14. A shaft seal (24c; 24d) according to one of the preceding claims,
**characterized in that** the circumferential sealing lips (34c; 34d, 36c; 36d) delimiting the outer cavity (38c; 38d) are coupled axially to one another by at least one connecting element (96c).

15. A shaft seal (24g; 24h) according to one of the preceding claims,
**characterized in that** the circumferential sealing lips (34g; 34h, 36g; 36h) delimiting the outer cavity (38g; 38h) have a different radial extent.

## Revendications

1. Bague d'étanchéité d'arbre (24a-24e ; 24g, 24h), comportant
- un corps de base annulaire (26a-26e ; 26g, 26h) dont une surface extérieure (28a-28e ; 28g, 28h) forme une surface d'étanchéité s'étendant dans la direction périphérique et à partir de l'autre surface extérieure opposée (32a-32e ; 32g, 32h) duquel s'étendent radialement au moins deux lèvres d'étanchéité périphériques (34a-34e ; 34g, 34h, 36a-36e ; 36g, 36h) entre lesquelles est délimitée une cavité extérieure ouverte vers l'extérieur (38a-38e ; 38g, 38h), et comportant
- une entrée de fluide sous pression (54a-54e ; 54g, 54h) dans une paroi extérieure du corps de base (26a-26e ; 26g, 26h) et une sortie de fluide sous pression (56a-56e ; 56g, 56h) qui débouche dans la cavité extérieure (38a-38e ; 38g, 38h) et qui est en communication fluidique avec l'entrée (54a-54e ; 54g, 54h),
dans laquelle le corps de base (26a-26e ; 26g, 26h) comprend une cavité intérieure (60a-60e ; 60g, 60h) séparée de manière étanche à la pression de la cavité extérieure (38a-38e ; 38g, 38h), et dans laquelle les parois extérieures latérales de la bague d'étanchéité d'arbre (24a-24e ; 24g, 24h) délimitant la cavité intérieure (60a-60e ; 60g, 60h) sont formées par le corps de base (26a-26e ; 26g, 26h).

2. Bague d'étanchéité d'arbre (24a-24e ; 24g, 24h) selon la revendication 1,
**caractérisée en ce que** la sortie (56a-56e ; 56g, 56h) est disposée dans une paroi (59a ; 59c) séparant les cavités intérieure et extérieure (60a-60e ; 60g, 60h, 38a-38e ; 38g, 38h) l'une de l'autre.

3. Bague d'étanchéité d'arbre (24a ; 24b ; 24g ; 24h) selon la revendication 1 ou la revendication 2,
**caractérisée en ce qu'**au moins un canal de lubrifiant (62a ; 62b, 64a ; 64b) s'étend à partir de la cavité intérieure (60a ; 60b ; 60g ; 60h) dans au moins une desdites au moins deux lèvres d'étanchéité périphériques (34a ; 34b ; 34g ; 34h, 36a ; 36b ; 36g ; 36h), ledit canal débouche à une surface de glissement (40a ; 40b ; 40g, 42a ; 42b ; 42g) de ladite au moins une lèvre d'étanchéité périphérique (34a ; 34b ; 34g ; 34h, 36a ; 36b ; 36g ; 36h).

4. Bague d'étanchéité d'arbre (24c-24e) selon l'une des revendications 1 à 3,
**caractérisée en ce qu'**une autre lèvre d'étanchéité périphérique (80c-80e, 82c-82e) s'étendant radialement est prévue au voisinage d'au moins une desdites au moins deux lèvres d'étanchéité périphériques (34c-34e, 36c-36e), un espace intermédiaire (84c, 86c) étant prévu entre chaque autre lèvre d'étanchéité périphérique (80c-80e, 82c-82e) et une lèvre adjacente parmi lesdites au moins deux lèvres d'étanchéité périphériques (34c-34e, 36c-36e).

5. Bague d'étanchéité d'arbre (24c-24e) selon la revendication 4,
**caractérisée en ce qu'**au moins un canal de lubrifiant (88c, 90c) s'étend à partir de la cavité intérieure (60c-60e) dans l'espace intermédiaire (84c, 86c) entre deux lèvres d'étanchéité périphériques adjacentes (34c-34e, 36c-36e, 80c-80e, 82c-82e).

6. Bague d'étanchéité d'arbre (24c-24e) selon la revendication 5,
**caractérisée en ce que** l'espace intermédiaire (84c, 86c) entre les lèvres d'étanchéité périphériques adjacentes (34c-34e, 36c-36e, 80c-80e, 82c-82e) est au moins partiellement rempli d'une mousse de type éponge (92c, 94c).

7. Bague d'étanchéité d'arbre (24a-24e) selon l'une des revendications 3 à 6,
**caractérisée en ce qu'**une mousse de type éponge (66a) est prévue dans la cavité intérieure (60a-60e), laquelle remplit au moins une partie de la cavité intérieure (60a-60e) et recouvre une ouverture d'entrée dudit au moins un canal de lubrifiant (62a ; 62b, 64a ; 64b, 88c, 90c).

8. Bague d'étanchéité d'arbre (24a-24e ; 24g, 24h) selon l'une des revendications 3 à 7,
**caractérisée en ce que** la cavité intérieure (60a-60e ; 60g, 60h) contient un lubrifiant.

9. Bague d'étanchéité d'arbre (24b ; 24d ; 24g ; 24h) selon l'une des revendications précédentes,
**caractérisée en ce qu'**une paroi extérieure latérale du corps de base (26b ; 26d ; 26g ; 26h) comprend au moins une ouverture d'entrée de lubrifiant (74b ; 74d) qui mène dans la cavité intérieure (60b ; 60d ; 60g ; 60h).

10. Bague d'étanchéité d'arbre (24a-24e) selon l'une des revendications précédentes,
**caractérisée en ce qu'**un noyau (68a ; 68c ; 68e) logé dans le corps de base (26a-26e) et raidissant le corps de base (26a-26e) se prolonge dans une zone à partir de laquelle s'étend au moins une lèvre d'étanchéité périphérique (34a-34e, 36a-36e, 80c-80e, 82c-82e).

11. Bague d'étanchéité d'arbre (24a-24d) selon la revendication 10,
**caractérisée en ce que** le noyau raidisseur (68a ; 68c) se prolonge dans au moins une lèvre d'étanchéité périphérique (34a-34d, 36a-36d, 80c ; 80d, 82c ; 82d).

12. Bague d'étanchéité d'arbre (24a-24d) selon la revendication 11,
**caractérisée en ce qu'**une partie (69a) du noyau (68a ; 68c) présente dans une des lèvres d'étanchéité périphériques (34a-34d, 36a-36d, 80c ; 80d, 82c ; 82d) peut pivoter par rapport au noyau restant (68a ; 68c).

13. Bague d'étanchéité d'arbre (24e) selon l'une des revendications précédentes,
**caractérisée en ce qu'**une paroi extérieure latérale du corps de base (26e) est stabilisée par un élément raidisseur (102e, 104e) fixé au corps de base (26e) à l'extérieur de la paroi extérieure latérale.

14. Bague d'étanchéité d'arbre (24c ; 24d) selon l'une des revendications précédentes,
**caractérisée en ce que** les lèvres d'étanchéité périphériques (34c ; 34d, 36c ; 36d) délimitant la cavité extérieure (38c ; 38d) sont couplées axialement l'une à l'autre par au moins un élément de liaison (96c).

15. Bague d'étanchéité d'arbre (24g ; 24h) selon l'une des revendications précédentes,
**caractérisée en ce que** les lèvres d'étanchéité périphériques (34g ; 34h, 36g ; 36h) délimitant la cavité extérieure (38g ; 38h) présentent une extension radiale différente.
